(19) Europäisches Patentamt
European Patent Office
Office européen des brevets

(11) Publication number: 0 253 752 A2

# (12) EUROPEAN PATENT APPLICATION

(21) Application number: 87630099.7

(22) Date of filing: 02.06.87

(51) Int. Cl.[4]: C 08 F 279/02
C 08 F 8/00, C 08 J 3/24

(30) Priority: 15.07.86 US 885986

(43) Date of publication of application: 20.01.88 Bulletin 88/03

(84) Designated Contracting States: FR GB IT

(71) Applicant: HUGHES TOOL COMPANY
5425 Polk Avenue
Houston Texas 77023 (US)

(72) Inventor: Guzy, Raymond L.
7451 South Yale
Tulsa Oklahoma 74136 (US)

(74) Representative: Schmitz, Jean-Marie et al
OFFICE DENNEMEYER S.à.r.l. P.O. Box 1502
L-1015 Luxembourg (LU)

## (54) Synthetic elastomer with improved chemical, aging and oil resistance.

(57) Ethylene propylene copolymer elastomers and ethylene propylene diene terpolymer elastomers are shown which, when cured, exhibit improved oil resistance and chemical aging properties at elevated temperatures and pressures. A previously polymerized liquid 1, 2-polybutadiene is incorporated into the elastomer during the polymerization step. Such compositions are useful as electrical insulating materials for use under extreme environmental conditions, particularly in wire and cable constructions.

EP 0 253 752 A2

**Description**

The present invention relates to improved synthetic elastomers made by incorporating polybutadiene with polyolefin rubbers, the resulting elastomers having improved chemical, aging and oil resistance properties, the polybutadiene being incorporated into the rubber during the polymerization of the rubber.

Synthetic olefin polymers are popular as electrical insulating materials because of their ease of compounding, good extrudability and excellent electrical characteristics. These polymers also find use as valve seats, and in other applications. In particular, ethylene-propylene copolymer rubbers, known as EPR, and ethylene-propylene-nonconjugated diene terpolymer rubbers, known as EPDM have been widely employed as the primary insulating materials for electrical wire and cable. These materials have the characteristics of flowing and/or distorting at elevated temperatures and under extreme pressures and are sensitive to swelling and dissolving in various hydrocarbon solvents and oils. Where insulated wire and cable is needed for extreme conditions, EPR and EPDM elastomers have been physically blended with low molecular weight polybutadiene in a roll mill, Banbury mixer, or the like. The physical blending or incorporation of the polybutadiene into the EPR/EPDM rubber provides additional cure sites for greater cross link density. An increase in cross link density has been found to enhance the chemical aging and oil resistance of the elastomer, improving the performance of the elastomer in extreme environmental conditions. U.S. Pat. No. 3 926 900 to Guzy et al., issued December 16, 1975, discusses the physical blending of liquid 1-2 polybutadiene with EPDM polymers.

The present invention has as its object, the provision of an EPR/EPDM elastomer with a higher cross link density than previously possible to improve the oil resistance and chemical aging properties of the elastomer.

A method is shown for manufacturing a synthetic elas tomer in which a previously polymerized liquid, 1, 2-polybutadiene is incorporated into an elastomer selected from the group consisting of ethylene-propylene copolymer rubbers and ethylene-propylene-nonconjugated diene terpolymer rubbers, the previously polymerized liquid, 1, 2-polybutadiene being incorporated during the polymerization of the elastomer to provide additional cure sites on the resulting elastomer. The elastomer can then be cured with a suitable curing agent to produce an insulating material exhibiting excellent electrical characteristics, ease of compounding, and improved performance at extreme temperatures and pressures when exposed to solvents, oil and aqueous environments.

Additional objects, features and advantages will be apparent in the written description which follows.

In the method used to produce the synthetic elastomers of the invention, a previously polymerized liquid, 1, 2-polybutadiene is incorporated into an EPR/EPDM rubber during the polymerization of the rubber. The liquid 1, 2-polybutadiene is characterized as a low molecular weight polymer of butadiene wherein greater than 50 percent of the monomer units are present in the 1, 2 configuration. As is well known, 1, 3-butadiene monomer can be polymerized by a variety of techniques to give polymers having a high proportion of units having 1, 4 attachment in the cis and trans configuration. Certain commercial techniques based on anionic polymerization technology are also well known whereby the 1, 3-butadiene monomer may be polymerized to give polymers having a high proportion of 1, 2 attachment, viz:

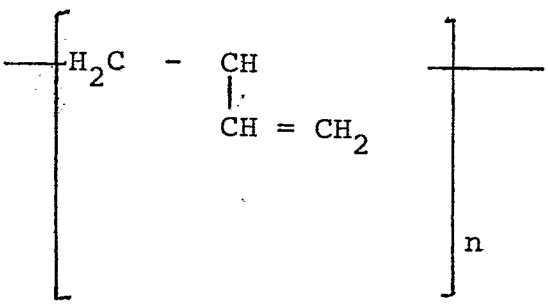

Such polymers can be produced in a variety of molecular weight ranges and with varying proportions of 1, 2 to 1, 4 units. For the purposes of this invention, those materials having molecular weights low enough to be liquid or semi-solid, when at room temperature and solvent free, and containing not less than about 50 mole percent units having 1, 2 attachment, preferably not less than 80 mole percent units having 1, 2 attachment, the remaining fraction being units with 1, 4 attachment, are preferred. While the molecular weight of these materials may vary somewhat depending upon the proportion of 1, 2 and 1, 4 attachments and remain liquid, it has been found that the most desirable have molecular weights in the range from about 1,500 to 25,000. Although called liquid resins, many of these are extremely viscous, having viscosities in the range of 10,000-250,000 cps at room temperature, being truly pourable only when heated. The most preferred material is sold under the tradename "RICON 154" having 90 mole percent units having 1, 2 attachment, a molecular weight of 3,200 and a viscosity of 250,000 cps at 45 C.

The EPR and EPDM materials which are polymerized in the method of the invention are well known in the art. Because of the presence of the diene monomer to provide cure sites, the EPDM material is preferred. The EPDM material is a terpolymer of ethylene with propylene and minor amounts of a nonconjugated diene monomer. In general, the ethylene monomer component normally ranges from 20 to 80 percent by weight and the propylene concentration from 80 to 20 percent by weight. The nonconjugated diene monomer is additionally employed in EPDM, the amount used being sufficient to provide curing sites, but not so great as to interfere seriously with the rubbery character of the product, i.e., in the range from about 2 to 20 percent by weight and preferably not greater than about l0 percent by weight of the total product. Typically, the diene monomer is a straight chain or cyclic diolefin such as l, 4-hexadiene, dicyclopentadiene, ethylidene norbornene and the like. The preferred EPDM materials are those containing from about 50 to about 80 percent ethylene and correspondingly from about 45 to about l5 percent propylene, the remaining proportion being diene monomer.

A description of EPDM rubbers and their preparation is contained in U.S. Pat. No. 3 637 6l7 to Wirth, issued January 25, l972. The following treatises also discuss the preparation of EPDM rubbers: "The Introduction to Rubber Technology," by M. Morton, Reinhold Publishing Corporation, New York (l959); "Synthetic Rubber Technology," Vol. l, by W.S. Penn, MacLaren and Sons, Ltd., London (l960); "Rubber, Fundamentals of its Science and Technology," by J. LeBras, Chemical Publishing Company, Inc., New York (l957); and Linear and Stereoregular Addition Polymers, by N.G. Gaylord et al., Interscience Publishers, New York (l959).

In the development of the method of the invention, laboratory experiments were performed in which a traditional EPDM elastomer was dissolved in a solvent, with the polybutadiene being added to the solvent solution. A masterbatch of an EPDM elastomer was prepared having the components shown in Table I. The masterbatch was mixed on a mill and three samples were obtained.

TABLE I

MASTERBATCH

| COMPONENTS OF MASTERBATCH | PARTS BY WEIGHT |
|---|---|
| EPDM (Oil Extended)[1] | 74. |
| EPDM[2] | 35. |
| Trimethylol-Propane-Trimeth-Acrylate | 3.3 |
| Catalyst[3] | 11. |

l EPsyn P-597 is an ethylene-propylene-ENB-terpolymer extended with l00 phr paraffinic oil, having a sp. gr. of 0.87, a Mooney viscosity of 55, supplied by Copolymer Rubber and Chemical Corp., Baton Rouge, Louisiana.

2 VISTALON 2504 is an EPDM terpolymer having a sp. gr. of 0.86, a Mooney viscosity of 35-45, supplied by Exxon Chemical Americas.

3 Dicup 40 KE (dicumyl peroxide).

Sample l

l23.3 grams of the masterbatch was dissolved in Toluene.
28. grams of liquid l, 2-polybutadiene (RICON l54) was added to the solution and mixed well.
Entire mix was air dried for several days.
A slab was molded of the dried mix at 350 degrees F for 20 minutes.
Properties were taken of the slab (see Table II).

Sample 2

l23.3 grams of the masterbatch was mixed on the mill.
28. grams of liquid l, 2-polybutadiene (RICON l54) was added to the masterbatch on the mill.
The mill mix was dissolved in Toluene.
Entire mix was air dried for several days.
A slab was molded of the dried mix at 350 degrees for 20 minutes.
Properties were taken of the slab (see Table II).

Sample 3

l23.3 grams of the masterbatch was dissolved in Toluene.
No liquid l, 2-polybutadiene was added.
The entire mix was air dried for several days.

A slab was molded of the dried mix at 350 degrees F for 20 minutes. Properties were taken of the slab (see Table II).

TABLE II

| Sample No. | Tensile $x10^3$ | Elongation % | Volume Change % |
|---|---|---|---|
| 1 | 9.3 | 100 | 86 |
| 2 | 3.6 | 80 | 103 |
| 3 | 2.7 | 300 | 195 |

The laboratory tests show that sample I containing the liquid I, 2-polybutadiene added in solution has the highest property values and the lowest volume change in xylene. Sample 3 which has no polybutadiene, had the lowest properties and the most swell in xylene.

The above laboratory work led to the method of the invention in which the polybutadiene is incorporated into the EPDM polymer during the polymerization of the EPDM. The previously described references, including U.S. Pat. No. 3 637 6I7 the disclosure of which is hereby incorporated by reference, teach known methods for polymerizing EPDM elastomers. The polymerization is typically carried out in a solvent solution in the presence of a Ziegler type catalyst. The polymerization solvent can be any suitable inert or saturated hydrocarbon which is liquid and relatively nonviscous under reaction conditions. Examples of satisfactory hydrocarbon solvents include open chain saturated hydrocarbons containing 5-8 carbon atoms, as represented by hexane; aromatic hydrocarbons, preferably hydrocarbons containing a single benzene nucleus, such as benzene or toluene; and saturated cyclic hydrocarbons which have boiling ranges approximating those for the open chain and aromatic hydrocarbons described, and preferably saturated cyclic hydrocarbons containing five or six carbon atoms in the ring structure. The solvent can be a mixture of one or more of the foregoing hydrocarbons, such as a mixture of aliphatic and naphthenic hydrocarbons having approximately the same boiling range as hexane.

The Ziegler type catalyst is known to those skilled in the art and is described in U.S. Pat. No. 2 933 480, No. 3 093 620, No. 3 093 62I, No. 3 2II 709 and No. 3 II3 II5.

Typical of such Ziegler type catalysts for use in the preparation of EPDM rubbers is a combination of vanadium compound and an alkyl aluminum halide. In the method of the invention, the polymerization of the EPDM elastomer is carried out as described in the above listed treatises, except that previously polymerized liquid I, 2-polybutadiene is added to the solvent solution of ethylene propylene, diene and catalyst. The amount of liquid I, 2-polybutadiene added is between about 5 to 50 weight percent based upon the weight of EPDM elastomer. Less than about 5 percent by weight polybutadiene results in elastomers which are considered too sensitive to hot oil, water and similar environments to be useful. Increasing the content of polybutadiene about 50 percent by weight results in elastomers having decreased flexibility. While the flexibility of the resulting material can be improved by other additives, it becomes uneconomical to offset this effect in elastomers containing higher levels of polybutadiene.

The resulting EPDM elastomer resulting from the solvent blending or addition of liquid polybutadiene during polymerization can be combined with traditional additives. For instance, although the above examples utilized an oil-extended EPDM, the EPDM made by the method of the invention can be oil-extended in the traditional manner with any one of a number of common extending and compounding hydrocarbon oils. Among the extending oils suitable for this purpose are naphthenic oils. The oil extension is accomplished by normal compounding techniques, including Banburying and roll milling. The proportion of EPDM to oil employed is normally in the ratio of about 2:3 to about 3:I.

A suitable curing agent can also be added to the resulting elastomer to effect the necessary curing and cross linking of the compounded material. While sulfurbased curing systems have been employed for EPDM and for polybutadienes, we have found such systems less desirable than the organo-peroxide curing agents. The higher temperature peroxides, such as dicumyl peroxide.and A, A′-bis (t-butylperoxy)-di-isopropyl benzene have been found to be particularly useful in the present invention in that the resulting cure is rapidly accomplished and complete. The amount of curing agent employed will normally be in the range of I to 8 percent, preferably about 2 to 6 percent by weight of the total composition.

The blending of the EPDM, oil and curing agent can be accomplished by any of the common rubber compounding methods, including roll milling and the like. Additional materials including lubricants, fillers, antioxidants and carbon blacks commonly employed in electrical insulating materials can also be added, either at this point or during a later compounding step. A cure co-agent can be added to effect rapid cure and more complete utilization of the peroxide. Among the co-agents which have been found useful are trimethylolpropane trimethacrylate and m-phenylene dimaleimide. Curing co-agent compounds are normally employed in amounts from about I to 5 percent, and preferably from I to 3 percent by weight of the total composition.

While the invention has been shown in only one of its forms, it is not thus limited but is susceptible to various

changes and modifications without departing from the spirit thereof.

## Claims

1. A method of manufacturing a synthetic elastomer with improved chemical aging and oil resistance properties, comprising the steps of:
incorporating a previously polymerized liquid, 1-2 polybutadiene into an elastomer selected from the group consisting of ethylene-propylene copolymer elastomers and ethylene-propylene-nonconjugated diene monomer terpolymer elastomers, the previously polymerized liquid, 1-2 polybutadiene being incorporated during the polymerization of the elastomer to provide additional cure sites on the resulting elastomer; and
curing the elastomer with a suitable curing agent.

2. A method of manufacturing a synthetic elastomer with improved chemical aging and oil resistance properties, comprising the steps of:
incorporating a previously polymerized liquid, 1-2 polybutadiene into an ethylene-propylene-nonconjugated diene monomer terpolymer elastomer, the previously polymerized liquid, 1-2 polybutadiene being incorporated during the polymerization of the elastomer by adding the liquid 1-2 polybutadiene to a solvent mix of ethylene, propylene and nonconjugated diene monomers during the polymerization thereof, to provide additional cure sites on the resulting elastomer; and
curing the elastomer with a suitable curing agent.

3. A method of manufacturing a synthetic elastomer with improved chemical aging and oil resistance properties, comprising the steps of:
incorporating a previously polymerized liquid, 1-2 polybutadiene into an ethylene-propylene-nonconjugated diene monomer terpolymer elastomer, the ethylene-propylene-nonconjugated diene terpolymer having an ethylene/propylene ratio in the range of 20/80 to 80/20 and from about 2 to 20 weight percent of terpolymer of the nonconjugated diene monomer, the previously polymerized liquid, 1-2 polybutadiene having greater than about 50 percent 1-2 polymerized units and having a molecular weight between about 1500 and 25000 g/mole, the liquid 1-2 polybutadiene being incorporated during the polymerization of the elastomer by adding the liquid 1-2 polybutadiene to a solvent mix of ethylene, propylene and nonconjugated diene monomers during the polymerization thereof, to provide additional cure sites on the resulting elastomer; and
curing the elastomer with a suitable curing agent.

4. A method of manufacturing an electrical insulating material with improved chemical aging and oil resistance properties, comprising the steps of:
incorporating a previously polymerized liquid, 1-2 polybutadiene into an ethylene-propylene-nonconjugated diene monomer terpolymer elastomer, the ethylene-propylene-nonconjugated diene terpolymer having an ethylene/propylene ratio in the range of 20/80 to 80/20 and from about 2 to 20 weight percent of terpolymer of the nonconjugated diene monomer, the previously polymerized liquid, 1-2 polybutadiene having greater than about 50 percent 1-2 polymerized units and having a molecular weight between about 1500 and 25000 g/mole, the liquid 1-2 polybutadiene being incorporated during the polymerization of the elastomer by adding the liquid 1-2 polybutadiene to a solvent mix of ethylene, propylene and nonconjugated diene monomers during the polymerization thereof, to provide additional cure sites on the resulting elastomer; and
curing the elastomer with a peroxide curing agent.

5. A synthetic elastomer having improved chemical aging and oil resistance properties, comprising:
about 50 to 95 percent by weight of an ethylene-propylene-nonconjugated diene monomer terpolymer elastomer, the ethylene-propylene-nonconjugated diene terpolymer having an ethylene/propylene ratio in the range of 20/80 to 80/20 and from about 2 to 20 weight percent of terpolymer of the nonconjugated diene monomer;
from about 50 to 5 weight percent of a liquid 1-2 polybutadiene having greater than about 50 percent 1-2 polymerized units and having a molecular weight between about 1500 and 25000 g/mole, the liquid 1-2 polybutadiene having been incorporated during the polymerization of the elastomer by adding the liquid 1-2 polybutadiene to a solvent mix of ethylene, propylene and nonconjugated diene monomers during the polymerization thereof, to provide additional cure sites on the resulting elastomer; and
from about 2 to 6 weight percent of a peroxide curing compound.

6. The synthetic elastomer of claim 5, further comprising an oil extender present in the elastomer in the weight ratio of about 2:3 to 3:1, based upon the weight of polymerized terpolymer.